# EUROPÄISCHE PATENTSCHRIFT

(11) **EP 0 776 083 B1**
(45) Veröffentlichungstag und Bekanntmachung des Hinweises auf die Patenterteilung: **19.05.2004**
(21) Anmeldenummer: 96810765.6
(22) Anmeldetag: 11.11.1996
(51) Int. Cl.: H02M 7/519

(54) **Stromrichterschaltungsanordnung**
Power converter circuit
Convertisseur de puissance

(30) Priorität: 23.11.1995 DE 19543702
(43) Veröffentlichungstag der Anmeldung: 28.05.1997
(73) Patentinhaber: ABB Schweiz AG, 5400 Baden (CH)
(72) Erfinder: Grüning, Horst, Dr., 5430 Wettingen (CH); Rees, Jochen, 79761 Waldshut (DE)
(74) Vertreter: ABB Patent Attorneys

(56) Entgegenhaltungen:
- EP-A- 0 489 945
- WO-A-93/09600
- DE-A- 3 244 623
- DE-A- 4 042 378

## Beschreibung

### Technisches Gebiet

Die Erfindung bezieht sich auf das Gebiet der Leistungselektronik. Sie geht aus von einer Stromrichterschaltungsanordnung nach dem Oberbegriff des ersten Anspruchs.

### Stand der Technik

Solche Schaltungsanordnungen werden beispielsweise im Artikel "Efficient Snubbers for Voltage-Source GTO Inverters" von W. McMurray, IEEE Transactions on Power Electronics, Vol. PE-2, No. 3, July 1987 beschrieben. Es handelt sich dabei um Stromrichterschaltungsanordnungen mit mindestens zwei in Serie geschalteten GTOs, welche an eine Gleichspannungsquelle angeschlossen sind und mit dem gemeinsamen Knotenpunkt der Serieschaltung einen Lastanschluss bilden. Parallel zu den GTOs sind ausserdem sogenannte Antiparalleldioden vorgesehen, welche nach der Kommutierung den Stromfluss übernehmen. Um die GTOs beim Schalten vor allzu hohen Strom- und Spannungsflanken zu schützen, muss eine Beschaltung oder englisch "Snubber" vorgesehen werden. Diese umfasst nach dem Stand der Technik, wie er im erwähnten Artikel dargestellt ist, ein vergleichsweise aufwendiges Netzwerk von Induktivitäten, Kondensatoren, Widerständen und Dioden, welches parallel und in Serie zu den GTOs und Antiparalleldioden angeordnet ist. Weitere Beschaltungsvarianten offenbart der Artikel "An Overview of Low-Loss Snubber Technology for Transistor Converters" von A. Ferraro, IEEE 1982, Seiten 466-467.

Eine Stomrichterschaltungsanordnung gemäß dem Oberbegriff des ersten Anspruchs ist in der Offenlegungsschrift DE-A1-3 244 623 offenbart.

In der Europäischen Patentanmeldung EP-A1-0 489 945 und der internationalen PCT-Anmeldung WO-93/09600 wird die sogenannte "harte Ansteuerung" eines GTO beschrieben, und es werden Schaltungsanordnungen für entsprechende Ansteuereinheiten angegeben. Im Hinblick auf diese beiden Anmeldungen versteht man unter dem Begriff "harte Ansteuerung" die Ansteuerung des GTO mit einem Gatestrom, der so gestaltet ist, dass die Abschaltverstärkung IA/IGpeak deutlich kleiner ist als 3 und dass ein Anodenspannungsanstieg von mindestens 1 kV/µs resultiert.

Die nach dem obigen Stand der Technik gebauten GTO-Phasenbausteine - darunter versteht man denjenigen Teil eines Stromrichters, der für eine Phase eines Wechselspannungssystem benötigt wird - weisen aber immer noch einen vergleichsweise hohen Grad an Komplexität auf. Gründe hierfür sind:
- das hohe Mass an Schutzbeschaltungen, die zum Begrenzen der Strom- und Spannungssteilheit beim Ein- und Ausschalten der GT0s und Dioden notwendig sind;
- die Wechselwirkung zwischen den Beschaltungsmassnahmen (Kondensatoren zur dV/dt-Begrenzung bilden Schwingkreise mit den Drosseln zur dI/dt-Begrenzung);
- das Einwirken von Störungen aus dem versorgenden Zwischenkreis auf die jeweilige Phase mittels Verschiebungsströmen in den dV/dt-Kondensatoren, die zu störenden Ladungsträgerinjektionen in die Snuberdioden führen kann;
- die Verknüpfung der Eigenschaften vieler Einzelbauelemente zu einem komplexen Gesamtgebilde (Phasenbaustein, Umrichter), in dem Eigenschaften eines Einzelelementes (GTO, Ansteuerung des GTO, Diode, Snubber, Parasitäten des Zwischenkreises) im allgemeinen nicht ohne Gefährdung anderer Elemente geändert werden.

GTO-Phasenbausteine sind deshalb gross, kostspielig und entwicklungsintensiv. Nur in wenigen Fällen ist es gelungen, dem Wunsch des Kunden nach Modularität und einfachem Service wirksam und mit vertretbarem Mehraufwand nachzukommen.

In der nicht vorveröffentlichten Deutschen Patentanmeldung P 195 23 095.7 (DE 19523095) ist es gelungen, dass Beschaltungsnetzwerk zu verkleinern. Zum Einsatz kommen dort insbesondere GTOs, wie sie im US Patent No. 5,345,096 beschrieben werden. Es muss aber pro Zweig immer noch ein Spannungsanstieg begrenzender Schutzkondensator vorgesehen werden. Gerade aber die Kondensatoren sind vergleichsweise teuer und nehmen auch viel Platz in Anspruch. Wünschenswert wäre deshalb eine Schaltungsanordnung, bei welcher ganz auf ein Beschaltungsnetzwerk verzichtet werden kann.

### Darstellung der Erfindung

Die Aufgabe der Erfindung ist es, eine Stromrichterschaltungsanordnung anzugeben, welche modular, kostengünstig und klein aufgebaut werden kann. Parasitäre Effekte der beschriebenen Art sollen durch die Schaltung weitgehend von vorn herein ausgeschlossen sein, so dass Entwicklungsrisiko und -kosten auf ein Mass zurückgehen, wie es derzeit bereits von IGBT-Umrichtern der unteren Spannungs- und Leistungsklassen her bekannt ist. Insbesondere sollen die Leistungshalbleiterschalter ohne Schutzbeschaltungsnetzwerk betrieben werden können.

Diese Aufgabe wird bei einer Stromrichterschaltungsanordnung der eingangs genannten Art durch die Merkmale des ersten Anspruchs gelöst. Kern der Erfindung ist es also, dass
- die abschaltbaren Thyristoren (GTO1, GTO2) hart angesteuert werden. Insbesondere soll das Verhältnis des Anodenstroms I_{A} zu einem maximalen Gatestrom I_{Gpeak}, I_{A}/I_{Gpeak}, kleiner oder gleich 1 sein, und der Gatestrom soll derart schnell ansteigen, dass der Maximalwert I_{Gpeak} innerhalb einer Anstiegszeit tr kleiner gleich 2µs, vorzugsweise kleiner gleich 1µs, erreicht wird;
- eine Gesamtinduktivität L_{G} des Ansteuerkreises jedes abschaltbaren Thyristors (GTO1, GTO2) muss so klein gewählt werden, dass L_{G}≤ V_{GR}/(I_{Gpeak}/tr) gilt, wobei V_{GR} der Rückwärtsblockierspannung des jeweiligen Gates der abschaltbaren Thyristoren (GTO1, GTO2) entspricht;
- eine Freilaufschaltung zwischen der Gleichspannungsquelle und der Serienschaltung der abschaltbaren Thyristoren (GTO1, GTO2) vorgesehen ist; und dass
- die zu den Thyristoren antiparallel liegenden Dioden ein Rückstromverhalten mit einer Spannungszeitflanke dV/dt von 2 kV/µs bis 10 kV/µs aufweisen.

Diese Kombination von Massnahmen ermöglicht die Angabe einer Schaltung, die ohne die bisher notwendigen Snubberkondensatoren arbeiten kann. Dadurch werden Komponenten eingespart. Dies ermöglicht eine Kostenreduktion, und erfordert ein geringeres Bauvolumen. Ausserdem werden die Verluste des Umrichters durch den Wegfall gespeicherter Energien reduziert. Die Verluste bei Teillast sind mit der erfindungsgemässen Schaltung ungefähr proportional zum Laststrom, und die parasitären Einwirkungsmöglichkeiten werden aufgebrochen. Dadurch sind geringere Entwicklungskosten, ein kleineres Risiko und hoher Standardisierungsgrad möglich.

Die Freilaufschaltung umfasst einen Kondensator, eine Induktivität, eine Diode und einen Widerstand, wobei der Kondensator parallel zur Serienschaltung der abschaltbaren Thyristoren liegt.

Es werden verschiedene Ausführungsbeispiele für die Freilaufschaltung angegeben. Im einfachsten Fall ist pro Zweig eine Freilaufschaltung vorgesehen. Teile oder sogar die ganze Freilaufschaltung können auch für eine Mehrzahl von Zweigen verwendet werden. Dadurch ergeben sich Schaltungen, welche durch einen äusserst kompakten Aufbau gekennzeichnet sind.

Weitere Ausführungsbeispiele ergeben sich aus den entsprechenden abhängigen Ansprüchen.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Ein Ersatzschaltbild einer erfindungsgemässen Stromrichterschaltungsanordnung;
- Fig. 2: Strom- und Spannungsverlauf des Rückstromverhaltens der Antiparalleldioden;
- **Fig. 3**: Eine zweite Ausführungsform der Erfindung;
- **Fig. 4**: Eine dritte Ausführungsform der Erfindung;
- **Fig. 5**: Eine Variante der Ausführungsform nach Figur 1.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

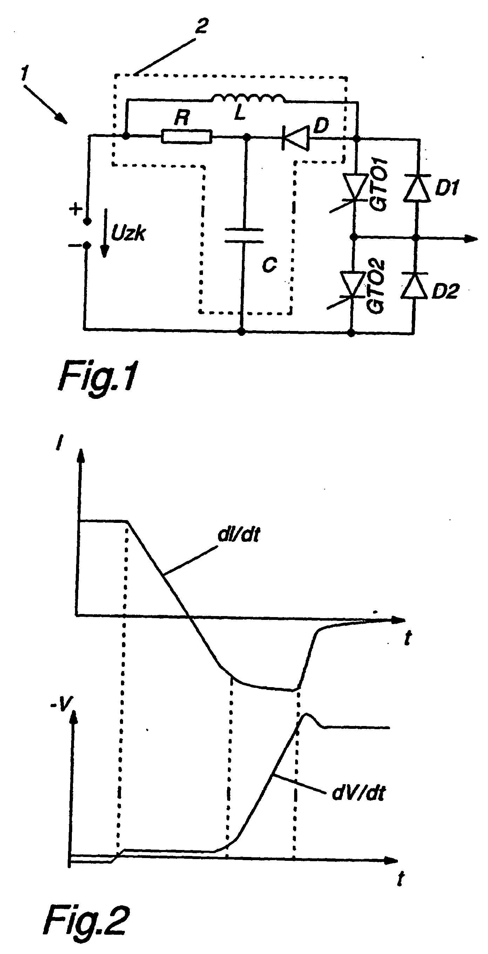

Figur 1 zeigt einen Zweig einer erfindungsgemässen Stromrichterschaltungsanordnung 1. Mit GTO1 und GTO2 sind zwei abschaltbare Thyristoren bezeichnet, die in Serie geschaltet sind. Der mittlere gemeinsame Knotenpunkt bildet einen Phasen oder Lastanschluss, an welche z.B. die Phasenanschlüsse eines Asynchronmotors angeschlossen werden können. Zwischen den abschaltbaren Thyristoren und einer Gleichspannungsquelle, welche insbesondere durch einen Gleichspannungszwischenkreis Uzk eines Umrichters gebildet wird, ist eine Freilaufschaltung 2 angeordnet.

Die GTOs der erfindungsgemässen Schaltung werden hart angesteuert. Es konnte gezeigt werden, dass es durch die harte Ansteuerung möglich wird, die durch die thermischen Möglichkeiten der GTOs (Wärmeerzeugung und -abfuhr) markierten Abschaltwerte für die meisten Anwendungen im Betrieb ohne Beschaltungs-, d.h. Spannungsanstieg begrenzende Kondensatoren, zu erreichen.

Im Gegensatz zur Erfindung sind bei Stand der Technik immer noch Schutzkondensatoren parallel zu den GTOs notwendig.

Im Gegensatz zur eingangs erwähnten EP-A1-0 489 945, wo noch kein beschaltungsfreier Betrieb möglich ist, soll das Verhältnis des Anodenstroms I_{A} zu einem maximalen Gatestrom I_{Gpeak}, I_{A}/I_{Gpeak}, kleiner oder gleich 1 sein, und der Gatestrom soll derart schnell ansteigen, dass der Maximalwert I_{Gpeak} innerhalb einer Anstiegszeit tr kleiner gleich 2µs, vorzugsweise kleiner gleich 1µs, erreicht wird.

Zu diesem Zwecke muss auch eine Gesamtinduktivität L_{G} des Ansteuerkreises jedes GTOs so klein gewählt werden, dass L_{G}≤ V_{GR}/(I_{Gpeak}/tr) gilt, wobei V_{GR} der Rückwärtsblockierspannung des Gates entspricht. Für Hochstrom-GTOs erreicht man dieses Ziel z.B. mit einem Aufbau, wie er in der eingangs genannten US 5,345,096 gelehrt wird.

Insgesamt erreicht man durch diese Art der Ansteuerung, dass der Kathodenstrom beim Abschalten den Wert Null erreicht, bevor die Anodenspannung ansteigt.

Antiparallel zu den GTOs sind Antiparalleldioden D1, D2 vorgesehen. Diese können im Falle eines rückwärtsleitenden GTOs auch im GTO integriert werden. Diese Dioden erfordern eine Begrenzung des dI/dt, die in bekannter Weise durch die Induktivität L erreicht wird. Die Dioden müssen neu ohne Snubberkondensator oder Beschaltung gegen diese induktive Last abkommutieren (Rückstromverhalten, "Reverse Recovery"). Die Dioden zeigen ein Rückstromverhalten, wie sie in Figur 2 oben dargestellt ist. Bei Übernahme der Spannung fliesst der Strom zunächst einmal für eine bestimmte Zeit in umgekehrter Richtung weiter. Erst dann steigt die Spannung mit einer bestimmten Flankensteilheit dV/dt an. Für die Erfindung werden deshalb speziell getrimmte Dioden (z.B. durch Lifetime-design mittels Protonen- oder Heliumbestrahlung) eingesetzt, die vorzugsweise so eingestellt werden, dass ihr dV/dt beim Abkommutieren unter Vollast im Bereich von 2 kV/µs ... 10 kV/µs liegt (siehe Figur 2).

Der snubberfreie Betrieb der GT0s und Antiparalleldioden führt speziell beim Design auf kleine Schaltverluste zu hohen dV/dt und entsprechend schnellen Abkommutierungsvorgängen mit hohen dl/dt. Es ist deshalb ein extrem niederinduktiver Aufbau notwendig (Gesamtkreis-Streuinduktivität < 100 ... 200nH). Zwischenkreis und Freilaufwiderstände lassen im allgemeinen einen solch niederinduktiven Aufbau nicht zu. Nach der Erfindung ist deshalb eine Schaltung notwendig, die die Einführung eines niederinduktiven Überlaufs gestattet. Der Überlaufkondensator C wird dabei in seiner Grösse so bemessen, dass er die transienten Überspannungen wirksam begrenzt, den Freilauf der Induktivität aber im wesentlichen nicht beeinflusst. So resultiert ein Kondensator mit C = 1 µF bis 3µF für die meisten Anwendungen im Bereich von 3kA Abschaltstrom.

Deshalb ist zwischen der Gleichspannungsquelle Uzk und den Schaltern eine niederinduktive schnelle Freilaufschaltung 2 vorgesehen. Im einfachsten Fall (Figur 1) umfasst diese Schaltung einen Kondensator C, welcher parallel zu den GTOs angeordnet ist und eine von einer Induktivität überbrückte Serienschaltung eines Widerstands R und einer Diode D, wobei der Widerstand R bzw. der Kondensator C einerseits mit der Kathode der Diode und andererseits mit dem Plusanschluss bzw. Minusanschluss der Gleichspannungsquelle verbunden ist.

In Figur 1 ist lediglich ein Zweig eines Stromrichters dargestellt. Im Allgemeinen sind mehrere Zweige oder Phasenbausteine vorgesehen und jedem Phasenbaustein wird eine Freilaufschaltung zugeordnet. Besonders bevorzugte Ausführungsformen lassen es zu, diese Elemente darüber hinaus für mehrere Phasenbausteine gemeinsam zu nutzen:

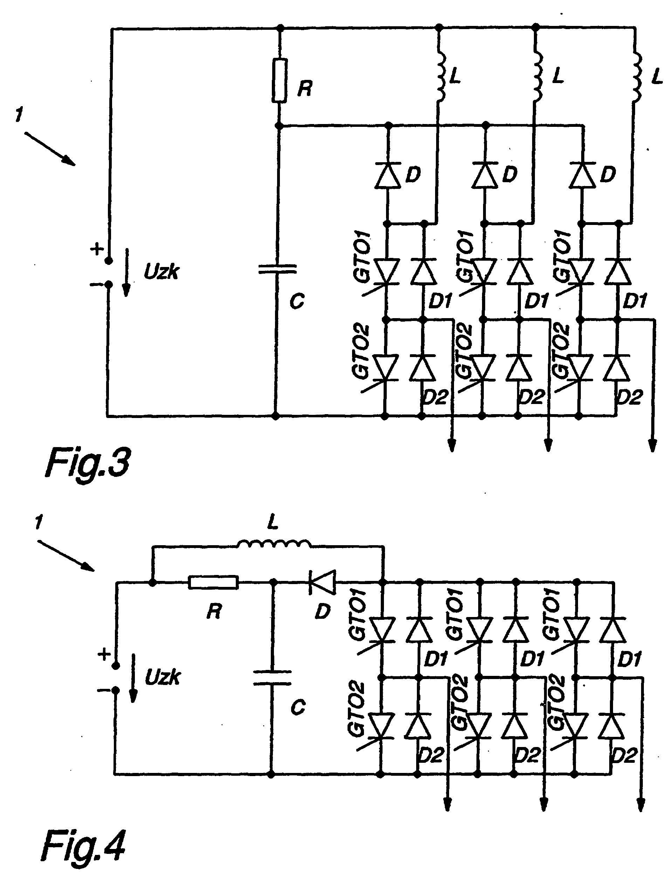

In Figur 3 wird der Freilaufwiderstand R und der Überlaufkondensator C von mehreren Phasenbausteinen gemeinsam genutzt. Es ist aber für jeden Zweig eine Induktivität vorgesehen. Diese Ausführungsform weist folgende Vorteile auf:
- Geringere Anzahl Bauelemente
- Konzentration der Wärmeleistung in einem Widerstand, d.h. geringer Kühlaufwand speziell bei Wasserkühlung, erhöhte Zuverlässigkeit bezüglich Wasserführung und Widerstandsdesign (robuster).
- kompakte Modulbauweise.

Bei der Ausführungsform nach Figur 4 werden die Induktivität L, der Widerstand R, der Überlaufkondensator C und die Diode D gemeinsam genutzt. Die Vorteile dieser Schaltung sind:
- extrem geringer Aufwand
- kompaktes Design
- minimales Gewicht und Bauvolumen (nur eine Induktivität, minimale Verschienungen).

Bei dieser Schaltung sollte vor dem Schalten einer Phase aber der Schaltvorgang eines Vorgängers soweit abgeschlossen sein, dass nur noch ein geringer Strom im Freilaufwiderstand R fliesst.

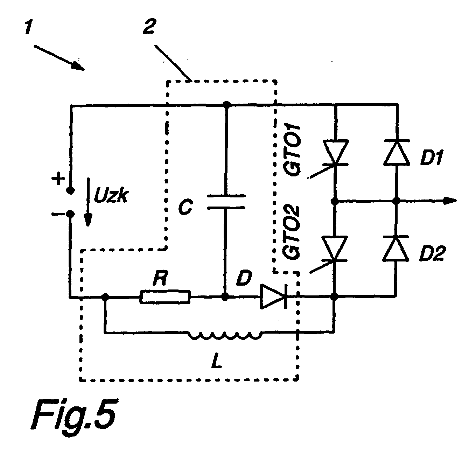

Die Freilaufschaltungen können aber auch, wie in Figur 5 für einen Zweig beispielhaft gezeigt wird, zwischen dem Minuspol des Gleichspannungszwischenkreises und den abschaltbaren Thyristoren angeordnet sein. Die Diode D muss dann mit umgekehrter Polarität eingesetzt werden. Der Rest der Schaltung ist spiegelsymmetrisch.

Insgesamt ergibt sich durch die erfindungsgemässen Massnahmen die Möglichkeit, einen Stromrichter zu bauen, der ohne Schutzbeschaltung der abschaltbaren Thyristoren und Antiparalleldioden auskommt.

Der Stromrichter kann auch die Form eines Dreipunktwechselrichters aufweisen. In diesem Fall sind pro Zweig mindestens vier Schalter vorgesehen, und es kann durch entsprechende Verschaltung der Schalter und des Gleichspannungszwischenkreises nicht nur die positive und die negative Zwischenkreisspannung sondern auch Null Volt an den Lastanschluss, der wiederum durch den mittleren gemeinsamen Knoten der Serienschaltung der Schalter gebildet wird, geschaltet werden. Die Funktion und der Aufbau eines Dreipunktwechselrichters sind aus vielen Fundstellen der Literatur bekannt und brauchen hier nicht weiter erklärt werden.

### Bezugszeichenliste

- 1: Stromrichterschaltungsanordnung
- 2: Freilaufschaltung
- GTO1, GTO2: abschaltbare Thyristoren
- D1, D2: Antiparalleldioden
- D: Freilaufdiode
- L: Induktivität
- R: Freilaufwiderstand
- C: Kondensator
- Uzk: Gleichspannungsquelle

## Patentansprüche

1. Stromrichterschaltungsanordnung (1) mit mindestens einem Zweig mit einer geraden Anzahl von in Serie geschalteten abschaltbaren Thyristoren (GTO1, GTO2) und mit Antiparalleldioden (D1, D2), welche antiparallel zu den abschaltbaren Thyristoren (GTO1, GTO2) geschaltet sind, wobei der oder jeder Zweig an eine Gleichspannungsquelle (Uzk) angeschlossen ist und ein mittlerer, gemeinsamer Knotenpunkt des oder jedes Zweiges einen Lastanschluss bildet, **dadurch gekennzeichnet, dass**
- die abschaltbaren Thyristoren (GTO1, GTO2) hart angesteuert werden, und zwar derart, dass ein Verhältnis eines Anodenstroms I_{A} zu einem maximalen Gatestrom I_{Gpeak}, I_{A}/I_{Gpeak}, kleiner oder gleich 1 ist, und der Gatestrom derart schnell ansteigt, dass I_{Gpeak} innerhalb einer Anstiegszeit tr kleiner gleich 2µs, vorzugsweise kleiner gleich 1µs, erreicht wird;
- eine Gesamtinduktivität L_{G} des Ansteuerkreises jedes abschaltbaren Thyristors (GTO1, GTO2) so klein gewählt wird, dass L_{G}≤ V_{GR}/(I_{Gpeak}/tr) gilt, wobei V_{GR} einer Rückwärtsblockierspannung des jeweiligen Gates der abschaltbaren Thyristoren (GTO1, GTO2) entspricht;
- eine Freilaufschaltung (2) zwischen der Gleichspannungsquelle und der Serienschaltung der abschaltbaren Thyristoren (GTO1, GTO2) vorgesehen ist; und
- die Antiparalleldioden ein Rückstromverhalten mit einer Spannungszeitflanke dV/dt von 2 kV/µs bis 10 kV/µs aufweisen.

2. Schaltungsanordnung nach Anspruch 1, **dadurch gekennzeichnet, dass** die Freilautschaltung (2) für jeden Zweig vorgesehen ist und die Freilaufschaltung einen Kondensator (C), einen Widerstand (R), eine Diode (D) und eine Induktivität (L) umfasst, wobei der Widerstand (R) und die Diode (D) in Serie und zwischen dem Pluspol der Gleichspannungsquelle (Uzk) und der Serienschaltung von abschaltbaren Thyristoren (GTO1, GTO2) geschaltet sind, die Induktivität (L) parallel zur Serienschaltung des Widerstandes (R) und der Diode (D) liegt und der Kondensator (C) einerseits mit dem gemeinsamen Knotenpunkt der Serienschaltung des Widerstandes (R) und der Diode (D) und andererseits mit dem Minuspol der Gleichspannungsquelle (Uzk) verbunden ist.

3. Schaltungsanordnung nach Anspruch 1, **dadurch gekennzeichnet, dass** die Freilaufschaltung (2) für jeden Zweig vorgesehen ist und die Freilaufschaltung einen Kondensator (C), einen Widerstand (R), eine Diode (D) und eine Induktivität (L) umfasst, wobei der Widerstand (R) und die Diode (D) in Serie und zwischen dem Minuspol der Gleichspannungsquelle (Uzk) und der Serienschaltung von abschaltbaren Thyristoren (GTO1, GTO2) geschaltet sind, die Induktivität (L) parallel zur Serienschaltung des Widerstandes (R) und der Diode (D) liegt und der Kondensator (C) einerseits mit dem gemeinsamen Knotenpunkt der Serienschaltung des Widerstandes (R) und der Diode (D) und andererseits mit dem Pluspol der Gleichspannungsquelle (Uzk) verbunden ist.

4. Schaltungsanordnung nach Anspruch 2 oder 3, **dadurch gekennzeichnet, dass** mindestens 3 Zweige vorgesehen sind und der Widerstand (R) und der Kondensator (C) der Freilaufschaltungen (2) der Zweige zu je einem gemeinsamen Bauelement zusammengefasst sind.

5. Schaltungsanordnung nach Anspruch 4, **dadurch gekennzeichnet, dass** auch die Induktivitäten (L) der Freilaufschaltungen (2) der Zweige zu einem gemeinsamen Bauelement zusammengefasst sind.

6. Schaltungsanordnung nach einem der Ansprüche 1 bis 5, **dadurch gekennzeichnet, dass** jeder Zweig mindestens vier abschaltbare Thyristoren und Antiparalleldioden aufweist, und
dass die abschaltbaren Thyristoren mit der Gleichspannungsquelle (Uzk) so verbunden sind, daß dar auf aufbauend ein Dreipunktwechselrichter gebildet wird.

## Claims

1. Converter circuit arrangement (1) having at least one path with an even number of series-connected thyristors (GTO1, GTO2) which can be turned off, and having reverse-parallel connected diodes (D1, D2) which are connected back-to-back in parallel with the thyristors (GTO1, GTO2) which can be turned off, the path or each path being connected to a DC voltage source (Uzk) and a central, common node of the path or of each path forming a load connection, **characterized in that**
- the thyristors (GTO1, GTO2) which can be turned off are hard driven, to be precise in such a manner that the ratio of the anode current I_{A} to the maximum gate current I_{Gpeak}, I_{A}/I_{Gpeak} is less than or equal to 1, and the gate current rises quickly in such a manner that I_{Gpeak} is reached within a rise time tr of less than or equal to 2µs, preferably less than or equal to 1µs;
- a total inductance L_{G} of the drive circuit of each thyristor (GTO1, GT02) which can be turned off is selected to be sufficiently small that L_{G}≤V_{GR}/(I_{Gpeak/tr}), V_{GR} corresponding to the reverse blocking voltage of the respective gate of the thyristors (GTO1, GTO2) which can be turned off;
- a freewheeling circuit (2) is provided between the DC voltage source and the series circuit formed by the thyristors (GTO1, GTO2) which can be turned off; and
- the reverse-parallel connected diodes have a reverse current response with a voltage/time differential dV/dt of 2kV/µs to 10kV/µs.

2. Circuit arrangement according to Claim 1, **characterized in that** the freewheeling circuit (2) is provided for each path and the freewheeling circuit comprises a capacitor (C), a resistor (R), a diode (D) and an inductance (L); the resistor (R) and the diode (D) being connected in series and being connected between the positive pole of the DC voltage source (Uzk) and the series circuit of thyristors (GTO1, GT02) which can be turned off, the inductance (L) being connected in parallel with the series circuit formed by the resistor (R) and the diode (D), and the capacitor (C) being connected on one side to the common node of the series circuit formed by the resistor (R) and the diode (D), and being connected on the other side to the negative pole of the DC voltage source (Uzk).

3. Circuit arrangement according to Claim 1, **characterized in that** the freewheeling circuit (2) is provided for each path and the freewheeling circuit comprises a capacitor (C), a resistor (R), a diode (D) and an inductance (L), the resistor (R) and the diode (D) being connected in series and being connected between the negative pole of the DC voltage source (Uzk) and the series circuit of thyristors (GTO1, GT02) which can be turned off, the inductance (L) being connected in parallel with the series circuit formed by the resistor (R) and the diode (D), and the capacitor (C) being connected on one side to the common node of the series circuit formed by the resistor (R) and the diode (D), and being connected on the other side to the positive pole of the DC voltage source (Uzk).

4. Circuit arrangement according to Claim 2 or 3, **characterized in that** at least 3 paths are provided and the resistor (R) and the capacitor (C) of the freewheeling circuits (2) in the paths are combined to form in each case one common component.

5. Circuit arrangement according to Claim 4, **characterized in that** the inductances (L) of the freewheeling circuits (2) of the paths are also combined to form a common component.

6. Circuit arrangement according to one of Claims 1 to 5, **characterized in that** each path has at least four thyristors, which can be turned off, and reverse-parallel connected diodes, and **in that** the thyristors which can be turned off are connected to the DC voltage source (Uzk) such that a three-point inverter is formed on this basis.

## Revendications

1. Arrangement de circuit convertisseur statique (1) comprenant au moins une branche composée d'un nombre pair de thyristors à extinction commandable (GTO1, GTO2) branchés en série et de diodes antiparallèles (D1, D2) qui sont branchées en antiparallèle avec les thyristors à extinction commandable (GTO1, GTO2), la ou chaque branche étant raccordée à une source de tension continue (Uzk) et un point de jonction central commun de la ou de chaque branche forme une borne de charge, **caractérisé en ce que**
- les thyristors à extinction commandable (GTO1, GTO2) sont commandés de manière directe, et ce de telle manière que le rapport entre un courant d'anode I_{A} et un courant de gâchette maximum I_{Gpeak}, I_{A}/I_{Gpeak}, est inférieur ou égal à 1 et le courant de gâchette augmente à une rapidité telle que la valeur I_{Gpeak} est atteinte en un temps de montée tr inférieur ou égal à 2 µs, de préférence inférieur ou égal à 1 µs ;
- une inductance globale L_{G} du circuit de commande de chaque thyristor à extinction commandable (GTO1, GTO2) est choisie suffisamment faible pour que L_{G} ≤ V_{GR}/ (I_{Gpeak}/tr), V_{GR} correspondant ici à la tension de blocage inverse de la gâchette correspondante des thyristors à extinction commandable (GTO1, GTO2) ;
- un circuit de roue libre (2) est prévu entre la source de tension continue et le circuit série composé des thyristors à extinction commandable (GTO1, GTO2) ; et
- les diodes branchées en antiparallèles présentent une fonction de courant de retour avec un front tension/temps dV/dt compris entre 2 kV/ps et 10 kV/µs.

2. Arrangement de circuit selon la revendication 1, **caractérisé en ce que** le circuit de roue libre (2) est prévu pour chaque branche et le circuit de roue libre comprend un condensateur (C), une résistance (R), une diode (D) et une inductance (L), la résistance (R) et la diode (D) étant branchées en série et entre la borne positive de la source de tension continue (Uzk) et le circuit série composé des thyristors à extinction commandable (GTO1, GT02), l'inductance (L) étant branchée en parallèle avec le circuit série composé de la résistance (R) et de la diode (D) et le condensateur (C) étant en liaison d'un côté avec le point de jonction commun du circuit série composé de la résistance (R) et de la diode (D) et de l'autre côté avec la borne négative de la source de tension continue (Uzk).

3. Arrangement de circuit selon la revendication 1, **caractérisé en ce que** le circuit de roue libre (2) est prévu pour chaque branche et le circuit de roue libre comprend un condensateur (C), une résistance (R), une diode (D) et une inductance (L), la résistance (R) et la diode (D) étant branchées en série et entre la borne négative de la source de tension continue (Uzk) et le circuit série composé des thyristors à extinction commandable (GTO1, GT02), l'inductance (L) étant branchée en parallèle avec le circuit série composé de la résistance (R) et de la diode (D) et le condensateur (C) étant en liaison d'un côté avec le point de jonction commun du circuit série composé de la résistance (R) et de la diode (D) et de l'autre côté avec la borne positive de la source de tension continue (Uzk).

4. Arrangement de circuit selon la revendication 2 ou 3, **caractérisé en ce qu'**au moins 3 branches sont prévues et la résistance (R) et le condensateur (C) des circuits de roue libre (2) des branches sont regroupés en un composant commun unique.

5. Arrangement de circuit selon la revendication 4, **caractérisé en ce que** les inductances (L) des circuits de roue libre (2) des branches sont elles aussi regroupées en un composant commun unique.

6. Arrangement de circuit selon l'une des revendications 1 à 5, **caractérisé en ce que** chaque branche présente au moins quatre thyristors à extinction commandable et diodes antiparallèles et que les thyristors à extinction commandable sont reliés à la source de tension continue (Uzk) de manière à réaliser un onduleur à trois paliers en se basant sur cette configuration.
